# EUROPEAN PATENT APPLICATION

(11) **EP 4 600 503 A1**
(43) Date of publication of application: **13.08.2025**
(21) Application number: 24809189.4
(22) Date of filing: 11.04.2024
(51) Int. Cl.: F15B 21/14

(54) **WASTE HEAT RECOVERY SYSTEM, METHOD, AND ENGINEERING MACHINERY**

(30) Priority: 26.12.2023 CN 202311819524
(71) Applicant: Huzhou Sany Loader Co., Ltd., Huzhou, Zhejiang 313000 (CN)
(72) Inventor: FAN, Naipeng, Huzhou, Zhejiang 313000 (CN); WANG, Chao, Huzhou, Zhejiang 313000 (CN); YIN, Yuxian, Huzhou, Zhejiang 313000 (CN)
(74) Representative: RGTH
(86) International application number: PCT/CN2024/087316
(87) International publication number: WO 2025/138491

(57) **Abstract**

Disclosed are a waste heat recovery system and method, and engineering machinery. The waste heat recovery system includes a hydraulic device, a first three-away valve, a second three-way valve, a first heat exchanger, an oil radiator, an oil heat dispersion system water pump and a battery pack. A first valve port of the first three-way valve communicates with an end of the hydraulic device, a second valve port of the second three-way valve communicates with another end of the hydraulic device, and two ends of the first heat exchanger respectively communicate with a third valve port of the first three-way valve and a first valve port of the second three-way valve. Two ends of the oil radiator are respectively connected to a second valve port of the first three-way valve and a third valve port of the second three-way valve, an end of the oil heat dispersion system water pump is connected to the first heat exchanger, and two ends of the battery pack respectively communicate with another end of the oil heat dispersion system water pump and the first heat exchanger.

## Description

### CROSS-REFERENCE TO RELATED APPLICATIONS

The present application claims priority to Chinese Patent Application No. 202311819524.9, filed on December 26, 2023, and the entire contents of the disclosure are hereby incorporated by reference in their entireties.

### TECHNICAL FIELD

The present application relates to the field of engineering machinery technologies, and in particular, to a waste heat recovery system and method, and engineering machinery.

### BACKGROUND

At present, in a working process of engineering machinery, heat generated by a hydraulic device during working is usually dissipated into air through a radiator. Under a condition that an ambient temperature is low, there is a need for a battery to be warmed up. Generally, the battery is heated by using heat generated by an electric heating device. In this way, the heat generated by the hydraulic device will be wasted, and meanwhile, energy consumption of a whole vehicle is increased because use of the electric heating device. A waste heat recovery system in the related art may use the heat generated by the hydraulic device to heat a battery pack, to achieve a purpose of appropriately reducing waste of the heat. However, in the waste heat recovery system in the related art, in a process of heating the battery pack by using the heat generated by the hydraulic device, a cooling liquid carrying heat will pass through the radiator, and the radiator will absorb a portion of the heat, resulting in that the heat generated by the hydraulic device cannot be fully utilized, and thus resulting in the waste of the heat.

### SUMMARY

In order to solve a technical problem above-mentioned, embodiments of the present application provide a waste heat recovery system and method, and engineering machinery, which may fully utilize heat generated during operating of a hydraulic device, so that waste of the heat is reduced.

According to a first aspect of the present application, a waste heat recovery system is provided, which includes:
a hydraulic device;
a first three-way valve, a first valve port of the first three-way valve communicating with an end of the hydraulic device;
a second three-way valve, a second valve port of the second three-way valve communicating with another end of the hydraulic device;
a first heat exchanger, two ends of the first heat exchanger communicating with a third valve port of the first three-way valve and a first valve port of the second three-way valve, respectively;
an oil radiator, two ends of the oil radiator being connected with a second valve port of the first three-way valve and a third valve port of the second three-way valve, respectively;
an oil heat dispersion system water pump, an end of the oil heat dispersion system water pump being connected to the first heat exchanger; and
a battery pack, two ends of the battery pack communicating with another end of the oil heat dispersion system water pump and the first heat exchanger, respectively.

According to the first aspect of the present application, the waste heat recovery system further includes:
a third three-way valve, a first valve port of the third three-way valve communicating with an end of the battery pack;
a motor electronic control water pump, an end of the motor electronic control water pump communicating with a third valve port of the third three-way valve;
a fourth three-way valve, a first valve port of the fourth three-way valve communicating with another end of the motor electronic control water pump;
a sixth three-way valve, a first valve port of the sixth three-way valve communicating with an end of the battery pack;
a seventh three-way valve, a first valve port of the seventh three-way valve communicating with a third valve port of the sixth three-way valve 10;
a water radiator, two ends of the water radiator communicating with a second valve port of the sixth three-way valve and a second valve port of the third three-way valve, respectively; and
a motor electronic control assembly, two ends of the motor electronic control assembly communicating with a second valve port of the fourth three-way valve and a second valve port of the seventh three-way valve, respectively.

According to the first aspect of the present application, the waste heat recovery system further includes:
an evaporator assembly;
a first cut-off valve, two ends of the first cut-off valve communicating with the first heat exchanger and the evaporator assembly, respectively; and
a second cut-off valve, an end of the second cut-off valve communicating with the evaporator assembly, and another end of the second cut-off valve communicating with the oil heat dispersion system water pump.

According to the first aspect of the present application, the waste heat recovery system further includes:
a passenger compartment heating water pump, an end of the passenger compartment heating water pump communicating with an end of the evaporator assembly, another end of the passenger compartment heating water pump communicating with a third valve port of the fourth three-way valve, and another end of the evaporator assembly communicating with a third valve port of the seventh three-way valve.

According to the first aspect of the present application, the waste heat recovery system further includes:
a first expansion valve, an end of the first expansion valve communicating with the evaporator assembly;
a first condenser, an end of the first condenser communicating with another end of the first expansion valve; and
a passenger compartment refrigeration compressor, two ends of the passenger compartment refrigeration compressor communicating with the evaporator assembly and the first condenser, respectively.

According to the first aspect of the present application, the waste heat recovery system further includes:
a third cut-off valve, two ends of the third cut-off valve communicating with the battery pack and the first heat exchanger, respectively; and
a fourth cut-off valve, two ends of the fourth cut-off valve communicating with the battery pack and the oil heat dispersion system water pump, respectively.

According to the first aspect of the present application, the waste heat recovery system further includes: a battery route water pump, an end of the battery route water pump communicating with the battery pack;
a second heat exchanger, an end of the second heat exchanger communicating with another end of the battery water pump;
a fifth cut-off valve, two ends of the fifth cut-off valve communicating with the second heat exchanger and the battery pack, respectively;
a battery cooling compressor, an end of the battery cooling compressor communicating with the second heat exchanger;
a second condenser, an end of the second condenser communicating with another end of the battery cooling compressor; and
a second expansion valve, two ends of the second expansion valve communicating with the second condenser and the second heat exchanger, respectively.

According to a second aspect of the present application, a control method for waste heat recovery is further provided, which is applied to the waste heat recovery system according to the foregoing embodiments, and the control method for waste heat recovery includes:
controlling the first valve port and the third valve port of the first three-way valve to be opened, and the second valve port of the first three-way valve to be closed;
controlling the first valve port and the second valve port of the second three-way valve to be opened, and the third valve port to be closed, to make the hydraulic device, the second three-way valve, the first three-way valve and the first heat exchanger form a first oil circulation circuit; and
controlling the oil heat dispersion system water pump to be opened, to make the first heat exchanger, the oil heat dispersion system water pump and the battery pack form a first heat dissipation circulation water circuit, to heat the battery pack after converting heat of oil generated by the hydraulic device into heat of water.

According to the second aspect of the present application, the waste heat recovery system further includes:
a third three-way valve, a first valve port of the third three-way valve communicating with an end of the battery pack;
a motor electronic control water pump, an end of the motor electronic control water pump communicating with a third valve port of the third three-way valve;
a fourth three-way valve, a first valve port of the fourth three-way valve communicating with another end of the motor electronic control water pump;
a sixth three-way valve, a first valve port of the sixth three-way valve communicating with an end of the battery pack;
a seventh three-way valve, a first valve port of the seventh three-way valve communicating with a third valve port of the sixth three-way valve 10;
a water radiator, two ends of the water radiator communicating with a second valve port of the sixth three-way valve and a second valve port of the third three-way valve, respectively; and
a motor electronic control assembly, two ends of the motor electronic control assembly communicating with a second valve port of the fourth three-way valve and a second valve port of the seventh three-way valve, respectively; and
the waste heat recovery control method further includes:
   controlling the first valve port and the second valve port of the fourth three-way valve to be opened, and a third valve port of the fourth three-way valve to be closed;
   controlling the first valve port and the third valve port of the third three-way valve to be opened, and the second valve port of the third three-way valve to be closed;
   controlling the first valve port and the third valve port of the sixth three-way valve to be opened, and the second valve port of the sixth three-way valve to be closed;
   controlling the first valve port and the second valve port of the seventh three-way valve to be opened, and a third valve port of the seventh three-way valve to be closed; and
   controlling the motor electronic control water pump to be opened, to make the motor electronic control assembly, the seventh three-way valve, the sixth three-way valve, the battery pack, the third three-way valve, the motor electronic control water pump and the fourth three-way valve form a second heat dissipation circulation water circuit, to heat the battery pack after converting heat generated by the motor electronic control assembly into the heat of the water.

According to the second aspect of the present application, the waste heat recovery system further includes:
an evaporator assembly;
a first cut-off valve, two ends of the first cut-off valve communicating with the first heat exchanger and the evaporator assembly, respectively; and
a second cut-off valve, an end of the second cut-off valve communicating with the evaporator assembly, and another end of the second cut-off valve communicating with the oil heat dispersion system water pump; and
the control method for waste heat recovery further includes:
   controlling the first cut-off valve and the second cut-off valve to be opened; and
   controlling the oil heat dispersion system water pump to be opened, to make the first heat exchanger, the oil heat dispersion system water pump, the first cut-off valve, the evaporator assembly and the second cut-off valve form a third heat dissipation circulation water circuit, to provide heating heat for the evaporator assembly after converting the heat of the oil generated by the hydraulic device into the heat of the water.

According to the second aspect of the present application, the waste heat recovery system further includes:
a passenger compartment heating water pump, an end of the passenger compartment heating water pump communicating with an end of the evaporator assembly, another end of the passenger compartment heating water pump communicating with the third valve port of the fourth three-way valve, and another end of the evaporator assembly communicating with the third valve port of the seventh three-way valve; and
the control method for waste heat recovery further includes:
   controlling the second valve port and the third valve port of the fourth three-way valve to be opened, and the first valve port of the fourth three-way valve to be closed;
   controlling the second valve port and the third valve port of the seventh three-way valve to be opened, and the first valve port of the seventh three-way valve to be closed; and
   controlling the passenger compartment heating water pump to be opened, to make the motor electronic control assembly, the fourth three-way valve, the passenger compartment heating water pump, the evaporator assembly and the seventh three-way valve form a fourth heat dissipation circulation water circuit, to provide heating heat for the evaporator assembly after converting the heat generated by the motor electronic control assembly the heat of the water.

According to a third aspect of the present application, engineering machinery is further provided, which includes:
the waste heat recovery system described in previous embodiments.

According to the waste heat recovery system and method and the engineering machinery provided in the embodiments of the present application, the oil heat dispersion system water pump is controlled to be opened, to make the first heat exchanger, the oil heat dispersion system water pump and the battery pack form the first heat dissipation circulation water circuit, to heat the battery pack after converting the heat of the oil generated by the hydraulic into the heat of the water. When utilizing the heat generated by the hydraulic device, the cooling liquid will not pass through the oil radiator, so that the oil radiator is prevented from absorbing a portion of the heat, and all the heat generated by the hydraulic device will be used for heating the battery pack, thereby an effect of fully utilizing the heat generated by the hydraulic device is achieved, and thus the waste of the heat is effectively reduced.

### BRIEF DESCRIPTION OF THE DRAWINGS

The above-mentioned and other purposes, features and advantages of the present application will become more apparent from the more detailed description of the embodiments of the present application with reference to the drawings. The drawings are used for providing a further understanding of the embodiments of the present application and constitute a part of the specification, which are used for explaining the present application with the embodiments of the present application, and do not constitute a limitation on the present application. In the drawings, same reference numerals generally refer to the same components or steps.
FIG. 1 is a schematic diagram of a waste heat recovery system according to an exemplary embodiment of the present application;
FIG. 2 is a schematic diagram of a waste heat recovery system according to another exemplary embodiment of the present application;
FIG. 3 is a schematic diagram of a waste heat recovery system according to another exemplary embodiment of the present application;
FIG. 4 is a schematic diagram of a waste heat recovery system according to another exemplary embodiment of the present application;
FIG. 5 is a schematic diagram of a waste heat recovery system according to another exemplary embodiment of the present application;
FIG. 6 is a schematic flowchart of a waste heat recovery method according to an exemplary embodiment of the present application;
FIG. 7 is a schematic flowchart of a waste heat recovery method according to another exemplary embodiment of the present application;
FIG. 8 is a schematic flowchart of a waste heat recovery method according to another exemplary embodiment of the present application;
FIG. 9 is a schematic flowchart of a waste heat recovery method according to another exemplary embodiment of the present application.

Reference numerals: 100-waste heat recovery system; 1-battery cooling compressor; 2-battery route water pump; 3-third three-way valve; 4-motor electronic control water pump; 5-fourth three-way valve; 6-passenger compartment heating water pump; 7-first expansion valve; 8-passenger compartment refrigeration compressor; 9-seventh three-way valve; 10-sixth three-way valve; 11-fifth cut-off valve; 12-second expansion valve; 13-first fan; 14-second fan; 15-third fan; 16-fourth fan; 17-first three-way valve; 18-second three-way valve; 19-oil heat dispersion system water pump; 20-third cut-off valve; 21-first cut-off valve; 22-fourth cut-off valve; 23-second cut-off valve; 24-hydraulic device; 241-working device; 242-oil pump; 25-first heat exchanger; 26-battery pack; 27-motor electronic control assembly; 28-evaporator assembly; 29-water radiator; 30-oil radiator; 31-second heat exchanger; 32-first condenser; 33-second condenser.

### DETAILED DESCRIPTION OF THE EMBODIMENTS

In the following, exemplary embodiments according to the present application will be described in detail with reference to the drawings. Apparently, the described embodiments are merely a portion of the embodiments of the present application, rather than all the embodiments of the present application. It should be understood that, the present application is not limited by the exemplary embodiments described herein.

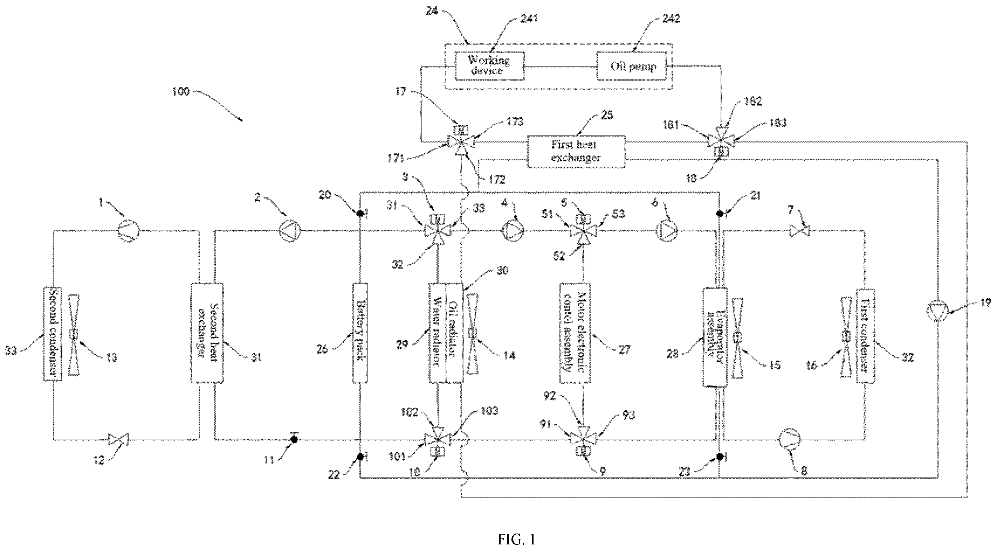

FIG. 1 is a schematic diagram of a waste heat recovery system according to an exemplary embodiment of the present application. As shown in FIG. 1, an embodiment of the present application provides a waste heat recovery system 100 which may include a hydraulic device 24. In practical applications, the hydraulic device 24 may be configured to assist in performing different operations, such as walking operations, hoisting operations, and the like.

As shown in FIG. 1, the hydraulic device 24 may include a working device 241 and an oil pump 242, the oil pump 242 may drive hydraulic oil to move to the working device 241, and then assist the working device 241 to perform a corresponding operation.

As shown in FIG. 1, the waste heat recovery system 100 may further include a first three-way valve 17, a second three-way valve 18, a first heat exchanger 25, an oil radiator 30, an oil heat dispersion system water pump 19, and a battery pack 26. A first valve port 171 of the first three-way valve 17 communicates with an end of the hydraulic device 24. A second valve port 182 of the second three-way valve 18 communicates with another end of the hydraulic device 24. Two ends of the first heat exchanger 25 respectively communicate with a third valve port 173 of the first three-way valve 17 and a first valve port 181 of the second three-way valve 18. Two ends of the oil radiator 30 are respectively connected with a second valve port 172 of the first three-way valve 17 and a third valve port 183 of the second three-way valve 18. An end of the oil heat dispersion system water pump 19 is connected to the first heat exchanger 25, and two ends of the battery pack 26 respectively communicate with another end of the oil heat dispersion system water pump 19 and the first heat exchanger 25.

In practical application, the first valve port 171 and the third valve port 173 of the first three-way valve 17 are controlled to be opened, and the second valve port 172 of the first three-way valve 17 is controlled to be closed, and the first valve port 181 and the second valve port 182 of the second three-way valve 18 are controlled to be opened, and the third valve port 183 of the second three-way valve 18 is controlled to be closed, so that a first oil circulation circuit is formed by the hydraulic device 24, the second three-way valve 18, the first three-way valve 17 and the first heat exchanger 25.

In an embodiment, the hydraulic oil output by the oil pump passes through the hydraulic device 24, a corresponding operation is performed by the hydraulic device 24, and the hydraulic oil generates heat. A temperature of the hydraulic oil output from the hydraulic device 24 is relatively high. The hydraulic oil output by the hydraulic device 24 passes through the first heat exchanger 25, a cooling liquid in the first heat exchanger 25 may exchange heat with the hydraulic oil, which serves to reduce the temperature of the hydraulic oil, and the hydraulic oil output from the first heat exchanger 25 may return to the hydraulic device 24 again.

In an embodiment, the first heat exchanger 25 may include a tubular heat exchanger, a plate heat exchanger, and the like.

As shown in FIG. 1, the battery pack 26 may provide power to electrical elements in engineering machinery. It should be understood that, in a case that an ambient temperature is relatively low, in order to ensure that the battery pack 26 is at a better operating temperature, the battery pack 26 needs to be heated.

Specifically, the oil heat dispersion system water pump 19 is controlled to be opened, so that a first heat dissipation circulation water circuit is formed by the first heat exchanger 25, the oil heat dispersion system water pump 19 and the battery pack 26. In this way, the hydraulic oil output by the hydraulic device 24 is transported into the first heat exchanger 25, and a heat exchange between the hydraulic oil and the cooling liquid is realized in the first heat exchanger 25. The oil heat dispersion system water pump 19 may transport the cooling liquid in the first heat exchanger 25 to the battery pack 26, so that an effect of heating the battery pack 26 by using the heat of the hydraulic oil in the hydraulic device 24 after the heat of the oil generated by the hydraulic device 24 is converted into heat of water is realized.

It should be understood that, according to the waste heat recovery system 100 provided in the embodiments of the present application, the oil heat dispersion system water pump 19 is controlled to be opened to make the first heat exchanger 25, the oil heat dispersion system water pump 19 and the battery pack 26 form the first heat dissipation circulation water circuit, to heat the battery pack 26 after the heat of the oil generated by the hydraulic device 24 is converted into the heat of the water. When the heat generated by the hydraulic device 24 is utilized, the cooling liquid will not pass through the oil radiator 30, so that the oil radiator 30 is prevented from absorbing part of the heat, and all the heat generated by the hydraulic device 24 will be used for heating the battery pack 26, thereby an effect of fully utilizing the heat generated by the hydraulic device 24 is achieved, and thus waste of heat is effectively reduced.

As shown in FIG. 1, the waste heat recovery system 100 may further include a third three-way valve 3, a motor electronic control water pump 4, a fourth three-way valve 5, a sixth three-way valve 10, a seventh three-way valve 9, a water radiator 29 and a motor electronic control assembly 27. A first valve port 31 of the third three-way valve 3 communicates with an end of the battery pack 26. An end of the motor electronic control water pump 4 communicates with a third valve port 33 of the third three-way valve 3. A first valve port 51 of the fourth three-way valve 5 communicates with another end of the motor electronic control water pump 4. A first valve port 101 of the sixth three-way valve 10 communicates with an end of the battery pack 26. A first valve port 91 of the seventh three-way valve 9 communicates with a third valve port 103 of the sixth three-way valve 10. Two ends of the water radiator 29 respectively communicate with a second valve port 102 of the sixth three-way valve 10 and a second valve port 32 of the third three-way valve 3. Two ends of the motor electronic control assembly 27 communicate with a second valve port 52 of the fourth three-way valve 5 and a second valve port 92 of the seventh three-way valve 9, respectively.

It should be noted that, the motor electronic control component 27 may be configured to send a control instruction to control whole vehicle operations of the engineering machinery. It should be understood that, the motor electronic control assembly 27 will generate a large amount of heat during operation.

**In** practical application, the first valve port 51 and the second valve port 52 of the fourth three-way valve 5 are controlled to be opened, and the third valve port 53 of the fourth three-way valve 5 is controlled to be closed; the first valve port 31 and the third valve port 33 of the third three-way valve 3 are controlled to be opened, and the second valve port 32 of the third three-way valve 3 is controlled to be closed; the first valve port 101 and the third valve port 103 of the sixth three-way valve 10 are controlled to be opened, and the second valve port 102 of the sixth three-way valve 10 is controlled to be closed; the first valve port 91 and the second valve port 92 of the seventh three-way valve 9 are controlled to be opened, and the third valve port of the seventh three-way valve 9 is controlled to be closed 3; and the motor electronic control water pump 4 is controlled to be opened, so that a second heat dissipation circulation water circuit is formed by the motor electronic control assembly 27, the seventh three-way valve 9, the sixth three-way valve 10, the battery pack 26, the third three-way valve 3, the motor electronic control water pump 4 and the fourth three-way valve 5. **In** this way, the motor electronic control water pump 4 may drive the cooling liquid to pass through the motor electronic control assembly 27, the cooling liquid may absorb heat generated by the motor electronic control assembly 27, and then the cooling liquid may pass through the battery pack 26 and the battery pack 26 is heated by heat carried by the cooling liquid.

It should be understood that, after the heat generated by the motor electronic control assembly 27 is converted into the heat of the water, in a process of heating the battery pack 26, the cooling liquid will not pass through the water radiator 29, so that the water radiator 29 is prevented from absorbing a portion of heat, and all the heat generated by the motor electronic control assembly 27 is used for heating the battery pack 26, thereby the effect of fully utilizing the heat generated by the motor electronic control assembly 27 is achieved, and thus the waste of the heat is effectively reduced.

As shown in FIG. 1, the waste heat recovery system 100 may further include an evaporator assembly 28, a first cut-off valve 21 and a second cut-off valve 23. The evaporator assembly 28 may perform heating or cooling on a passenger compartment, and two ends of the first cut-off valve 21 respectively communicate with the first heat exchanger 25 and the evaporator assembly 28. An end of the second cut-off valve 23 communicates with the evaporator assembly 28, and another end of the second cut-off valve 23 communicates with the oil heat dispersion system water pump 19.

In practical application, the first cut-off valve 21 and the second cut-off valve 23 are controlled to be opened, and the oil heat dispersion system water pump 19 is controlled to be opened, to make a third heat dissipation circulation water circuit be formed by the first heat exchanger 25, the oil heat dispersion system water pump 19, the first cut-off valve 21, the evaporator assembly 28 and the second cut-off valve 23.

Specifically, the oil heat dispersion system water pump 19 may drive the cooling liquid to pass through the first heat exchanger 25, and by combining with the first oil circulation circuit, a heat exchange of the cooling liquid and the hydraulic oil is performed in the first heat exchanger 25. That is, the cooling liquid may absorb the heat of the hydraulic oil output from the hydraulic device 24, then the cooling liquid may pass through the evaporator assembly 28, and the evaporator assembly 28 may heat the passenger compartment by using the heat carried by the cooling liquid to meet a heating requirement of the passenger compartment.

It should be understood that, after the oil heat generated by the hydraulic device 24 is converted into the heat of the water, the cooling liquid will not pass through the oil radiator 30 in a process of providing the heating heat for the evaporator assembly 28, so that the water oil radiator 30 is prevented from absorbing part of heat, and all the heat generated by the hydraulic device 24 is used for heating the passenger compartment, so that the effect of fully utilizing the heat generated by the hydraulic device 24 is achieved, and heat waste is effectively reduced.

As shown in FIG. 1, the waste heat recovery system 100 may include a passenger compartment heating water pump 6, an end of the passenger compartment heating water pump 6 communicates with an end of the evaporator assembly 28, another end of the passenger compartment heating water pump 6 communicates with the third valve port 53 of the fourth three-way valve 5, and another end of the evaporator assembly 28 communicates with the third valve port 93 of the seventh three-way valve 9.

**In** practical application, the second valve port 52 and the third valve port 53 of the fourth three-way valve 5 are controlled to be opened, and the first valve port 51 of the fourth three-way valve 5 is controlled to be closed; the second valve port 92 and the third valve port 93 of the seventh three-way valve 9 are controlled to be opened, and the first valve port 91 of the seventh three-way valve 9 is controlled to be closed; and the passenger compartment heating water pump 6 is controlled to be opened, to make a fourth heat dissipation circulation water circuit be formed by the motor electronic control component 27, the fourth three-way valve 5, the passenger compartment heating water pump 6, the evaporator assembly 28 and the seventh three-way valve 9.

Specifically, the passenger compartment heating water pump 6 may drive the cooling liquid to pass through the motor electronic control assembly 27. The cooling liquid may absorb heat generated by the motor electronic control assembly 27, then the cooling liquid may pass through the evaporator assembly 28, and the evaporator assembly 28 may heat the passenger compartment by using heat carried by the cooling liquid to meet a heating requirement of the passenger compartment.

It should be understood that, after the heat generated by the motor electronic control assembly 27 is converted into the heat of the water, during a process of providing the heating heat for the evaporator assembly 28, the cooling liquid will not pass through the water radiator 29, so that the water radiator 29 is prevented from absorbing a portion of the heat, and all the heat generated by the motor electronic control assembly 27 is used for heating the passenger compartment, thereby the effect of fully utilizing the heat generated by the motor electronic control assembly 27 is achieved, and thus the waste of the heat is effectively reduced.

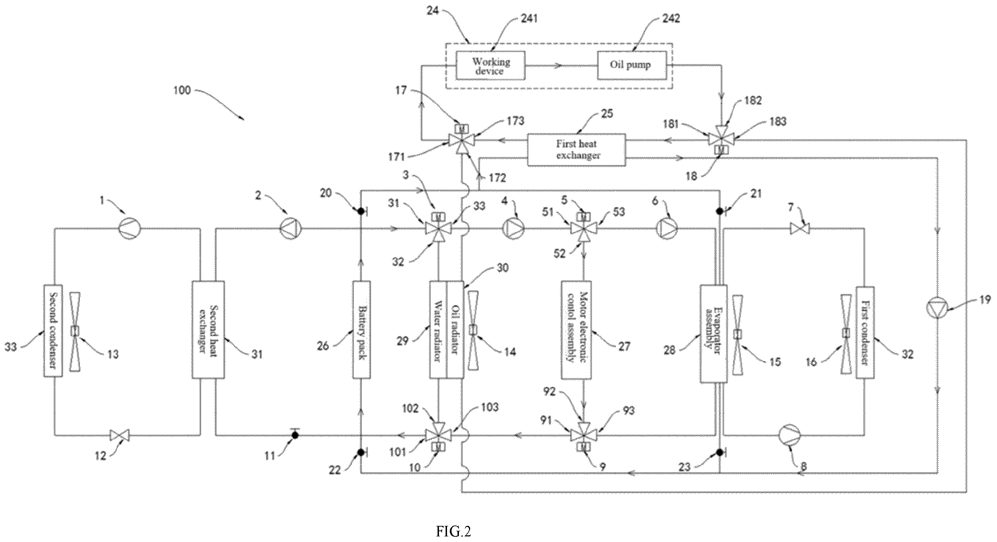

**In** an embodiment, FIG. 2 is a schematic diagram of a waste heat recovery system according to another exemplary embodiment of the present application. When an ambient temperature of engineering machinery is lower than a preset temperature value (which is set according to an actual situation, for example, the preset temperature value is 5°C), a battery pack 26 cannot be in a better working temperature range, and the battery pack 26 has a heating requirement. **In** this case, as shown in FIG. 2, a first heat dissipation circulation water circuit is connected (a communicating process may refer to introduction in the foregoing content) and a second heat dissipation circulation water circuit is connected (the communicating process may refer to an introduction in the foregoing content). **In** this way, the heat generated by the hydraulic device 24 and the motor electronic control assembly 27 may be fully utilized, that is, the cooling liquid will not pass through the oil radiator 30 and the water radiator 29, so that the oil radiator 30 and the water radiator 29 are prevented from absorbing a portion of the heat, and all heat generated by the hydraulic device 24 and the motor electronic control assembly 27 is used for heating the battery pack 26,thereby an effect of fully utilizing the heat generated by the motor electronic control assembly 27 and the hydraulic device 24 is achieved, and thus waste of the heat is effectively reduced.

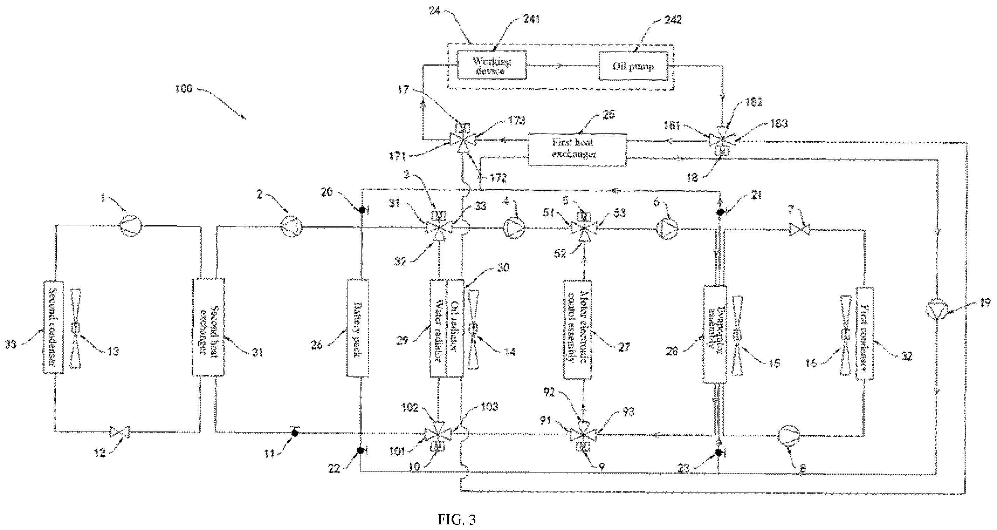

In an embodiment, FIG. 3 is a schematic diagram of a waste heat recovery system according to another exemplary embodiment of the present application. When an ambient temperature of engineering machinery is lower than a preset temperature value (which is set according to an actual situation, for example, the preset temperature value is 5°C), and the passenger compartment has a heating requirement. In this case, as shown in FIG. 3, a third heat dissipation circulation water circuit and a fourth heat dissipation circulation water circuit are both in connected. In this way, the heat generated by the hydraulic device 24 and the motor electronic control assembly 27 nay be fully utilized, that is, the cooling liquid will not pass through the oil radiator 30 and the water radiator 29, so that the oil radiator 30 and the water radiator 29 are prevented from absorbing a portion of the heat, and all the heat generated by the motor electronic control assembly 27 and the hydraulic device 24 is used for heating the passenger compartment, thereby an effect of fully utilizing the heat generated by the motor electronic control assembly 27 and the hydraulic device 24 is achieved, and thus the waste of the heat is effectively reduced.

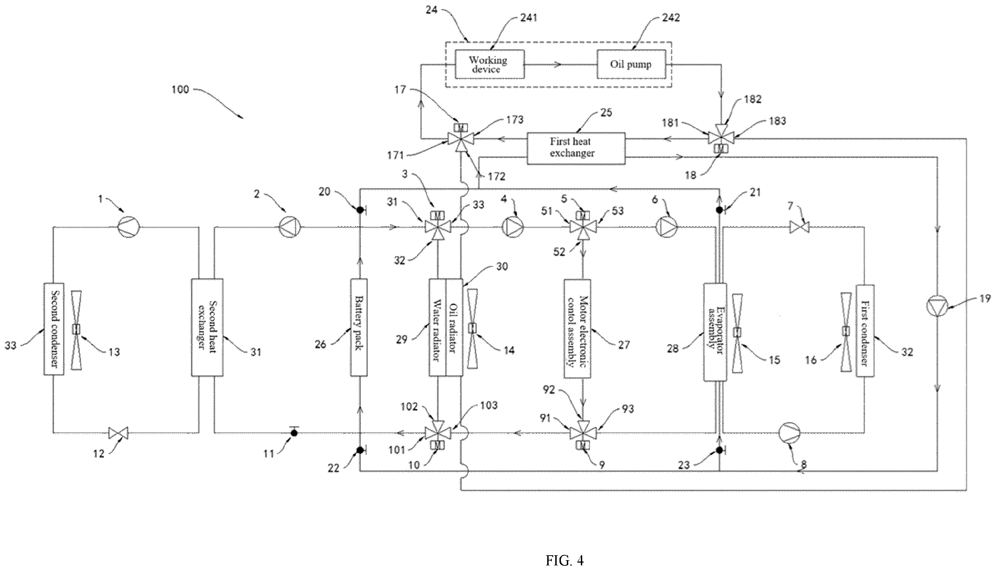

In an embodiment, FIG. 4 is a schematic diagram of a waste heat recovery system according to another exemplary embodiment of the present application. When an ambient temperature of engineering machinery is lower than a preset temperature value (which is set according to an actual situation, for example, the preset temperature value is 5°C), the battery pack 26 cannot be in a better working temperature range, and the battery pack 26 has a heating requirement. Meanwhile, the passenger compartment has a heating requirement. In this case, as shown in FIG. 4, the first heat dissipation circulation water circuit is connected, the heat generated by the hydraulic device 24 is used for heating the battery pack 26, and all the heat generated by the hydraulic device 24 is used for heating the battery pack 26. As shown in FIG. 4, the fourth heat dissipation circulation water circuit is connected, the heat generated by the motor electronic control assembly 27 is used for heating the passenger compartment, and all the heat generated by the motor electronic control assembly 27 is used for heating the passenger compartment.

In an embodiment, when the ambient temperature of the engineering machinery is lower than the preset temperature value (which is set according to the actual situation, for example, the preset temperature value is 5°C), the battery pack 26 cannot be in a better working temperature range, and the battery pack 26 has a heating requirement. Meanwhile, the passenger compartment has a heating requirement. Alternatively, the battery pack 26 may be heated by using the heat generated by the motor electronic control assembly 27 by connecting the second heat dissipation circulation water circuit; and the passenger compartment is heated by using the heat generated by the hydraulic device 24 by connecting the third water circulation circuit.

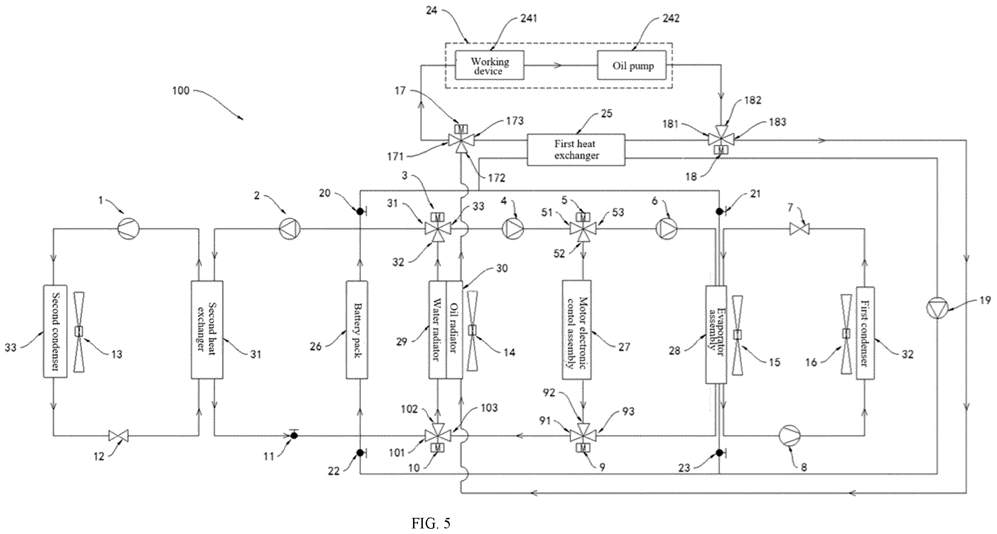

FIG. 5 is a schematic diagram of a waste heat recovery system according to another exemplary embodiment of the present application. As shown in FIG. 1 and FIG. 5, the waste heat recovery system 100 may further include a first expansion valve 7, a first condenser 32 and a passenger compartment refrigeration compressor 8. An end of the first expansion valve 7 communicates with the evaporator assembly 28, an end of the first condenser 32 communicates with another end of the first expansion valve 7, and two ends of the passenger compartment refrigeration compressor 8 respectively communicate with the evaporator assembly 28 and the first condenser 32.

Specifically, the evaporator assembly 28, the first expansion valve 7, the first condenser 32, and the passenger compartment refrigeration compressor 8 may form a first refrigerant circulation circuit, and the first expansion valve 7 may regulate a flow rate of a refrigerant in the first refrigerant circulation circuit according to actual conditions, to avoid occurrence of pipeline bursting caused by accumulation of the refrigerant in a pipeline.

As shown in FIG. 5, when the ambient temperature is relatively high, there is a cooling demand in the passenger compartment, so that the first refrigerant circulation circuit is controlled to be connected. The passenger compartment refrigeration compressor 8 drives the refrigerant to pass through the first condenser 32, the first condenser 32 cools the refrigerant, then the refrigerant may pass through the evaporator assembly 28, and the evaporator assembly 28 uses the refrigerant to cool the passenger compartment to meet the cooling demand in the passenger compartment.

As shown in FIG. 1 and FIG. 5, the waste heat recovery system 100 may further include a battery route water pump 2, a second heat exchanger 31, a fifth cut-off valve 11, a battery cooling compressor 1, a second condenser 33, and a second expansion valve 12. An end of the battery water pump 2 communicates with the battery pack 26, and an end of the second heat exchanger 31 communicates with another end of the battery water pump 2. Two ends of the fifth cut-off valve 11 respectively communicate with the second heat exchanger 31 and the battery pack 26. An end of the battery cooling compressor 1 communicates with the second heat exchanger 31, an end of the second condenser communicates with another end of the battery cooling compressor 1, and two ends of the second expansion valve 12 communicate with the second condenser 33 and the second heat exchanger 31.

Specifically, the battery cooling compressor 1, the second condenser 33, the second expansion valve 12, and the second heat exchanger 31 may form a second refrigerant circulation circuit, and the second expansion valve 12 may regulate a flow rate of a refrigerant in the second refrigerant circulation circuit according to actual conditions, thereby avoiding occurrence of pipe bursting caused by accumulation of the refrigerant in a pipeline.

Specifically, the battery route water pump 2, the second heat exchanger 31, the fifth cut-off valve 11, and the battery pack 26 may form a fifth heat dissipation circulation water circuit. As shown in FIG. 5, in the case that the ambient temperature is relatively high, a temperature of the battery pack 26 is relatively high during operating, so that the battery route water pump 2 is controlled to be opened, the fifth cut-off valve 11 is controlled to be closed, the cooling liquid passing through the battery pack 26 carries a large amount of heat, and then passes through the second heat exchanger 31, the refrigerant in the second heat exchanger 31 (running in the second refrigerant circulation circuit) may exchange heat with the cooling liquid, thereby an effect of reducing a temperature of the hydraulic oil is achieved, and the cooling liquid output from the second heat exchanger 31 may pass through the battery pack 26 again.

In an embodiment, the second heat exchanger 31 may include a tubular heat exchanger, a plate heat exchanger, and the like.

As shown in FIG. 5, when the ambient temperature is relatively high, the motor electronic control assembly 27 needs to be cooled, a second valve port 32 and a third valve port 33 of a third three-way valve 3 are controlled to be closed, a first valve port 31 of the third three-way valve 3 is controlled to be disconnected, a first valve port 51 and a second valve port 52 of a fourth three-way valve 5 are controlled to be closed, a third valve port 53 of the fourth three-way valve 5 is controlled to be disconnected, a first valve port 91 and a second valve port 92 of a seventh three-way valve 9 are controlled to be closed, a third valve port 93 of the seventh three-way valve 9 is controlled to be is closed, a second valve port 102 and a third valve port 103 of a sixth three-way valve 10 are controlled to be closed, and a first valve port 101 of the sixth three-way valve 10 is controlled to be disconnected. In this way, the cooling liquid may be cooled by using the water radiator 29, and the heat of the motor electronic control assembly 27 is dissipated by using the cooled cooling liquid.

As shown in FIG. 5, when the ambient temperature is relatively high, the battery pack 26 needs to be dissipated, the first valve port 171 and the second valve port 172 of the first three-way valve 17 are controlled to be closed, the third valve port 173 of the first three-way valve 17 is controlled to be disconnected, the second valve port 182 and the third valve port 183 of the second three-way valve 18 are controlled to be closed, and the first valve port 181 of the second three-way valve 18 is controlled to be disconnected. In this way, the cooling liquid may be cooled by using the oil radiator 30, and the battery pack 26 is dissipated by using the cooled cooling liquid.

As shown in FIG. 1, the waste heat recovery system 100 may further include a third cut-off valve 20 and a fourth cut-off valve 22. Two ends of the third cut-off valve 20 respectively communicate with the battery pack 26 and the first heat exchanger 25, and two ends of the fourth cut-off valve 22 respectively communicate with the battery pack 26 and the oil heat dispersion system water pump 19. The third cut-off valve 20 may control the battery pack 26 and the first heat exchanger 25 to be connected or disconnected, and the fourth cut-off valve 22 may control the battery pack 26 and the oil heat dispersion system water pump 19 to be connected or disconnected.

In practical application, when the third heat dissipation circulation water circuit needs to be connected (a communicating condition may refer to the foregoing description), the third cut-off valve 20 may be controlled to make the battery pack 26 communicate with the first heat exchanger 25, and the fourth cut-off valve 22 may be controlled to make the battery pack 26 communicate with the oil heat dispersion system water pump 19.

As shown in FIG. 1, the waste heat recovery system 100 may further include a first fan 13. The first fan 13 is disposed opposite to the second condenser 33, and the first fan 13 may improve a condensation rate of the second condenser 33.

As shown in FIG. 1, the water radiator 29 and the oil radiator 30 are distributed side by side, and the waste heat recovery system 100 may further include a second fan 14. The second fan 14 may improve a heat dissipation rate of the water radiator 29 and the oil radiator 30.

As shown in FIG. 1, the waste heat recovery system 100 may further include a third fan 15, and the third fan 15 is disposed opposite to the evaporator assembly 28. The third fan 15 may accelerate a rate of flow of air near the evaporator assembly 28, so that a working efficiency of the evaporator assembly 28 is improved.

As shown in FIG. 1, the waste heat recovery system 100 may further include a fourth fan 16, the fourth fan 16 is disposed opposite to the first condenser 32, and the fourth fan 16 may improve a condensation rate of the second condenser 32.

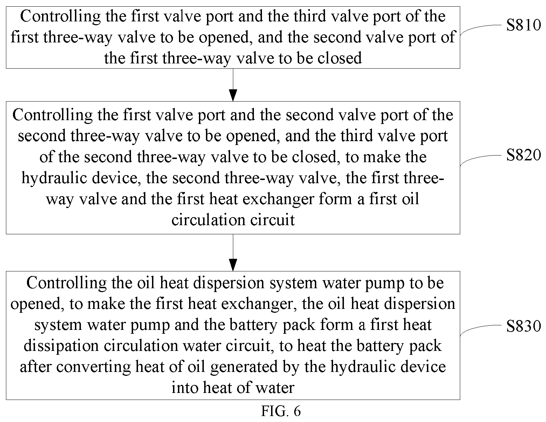

FIG. 6 is a schematic flowchart of a waste heat recovery method according to an exemplary embodiment of the present application. As shown in FIG. 6, the waste heat recovery method provided in the embodiment of the present application may be applied to the waste heat recovery system described in the foregoing embodiments, and the control method for waste heat recovery includes:

S810: controlling the first valve port and the third valve port of the first three-way valve to be opened, and the second valve port of the first three-way valve to be closed.

S820: controlling the first valve port and the second valve port of the second three-way valve to be opened, and the third valve port of the second three-way valve to be closed, to make the hydraulic device, the second three-way valve, the first three-way valve and the first heat exchanger form a first oil circulation circuit.

S830: controlling the oil heat dispersion system water pump to be opened, to make the first heat exchanger, the oil heat dispersion system water pump and the battery pack form a first heat dissipation circulation water circuit, to heat the battery pack after converting heat of oil generated by the hydraulic device into heat of water.

According to the waste heat recovery method provided by the embodiments of the present application, the oil heat dispersion system water pump 19 is controlled to be opened, to make the first heat dissipation circulation water circuit be formed by the first heat exchanger 25, the oil heat dispersion system water pump 19 and the battery pack 26, to heat the battery pack 26 after the heat of the oil generated by the hydraulic device 24 is converted into the heat of the water. When the heat generated by the hydraulic device 24 during operation is utilized, the cooling liquid will not pass through the oil radiator 30, so that the oil radiator 30 is prevented from absorbing a portion of the heat, and all the heat generated by the hydraulic device 24 is used for heating the battery pack 26, thereby an effect of fully utilizing the heat generated by the hydraulic device 24 is achieved, and thus the waste of the heat is effectively reduced.

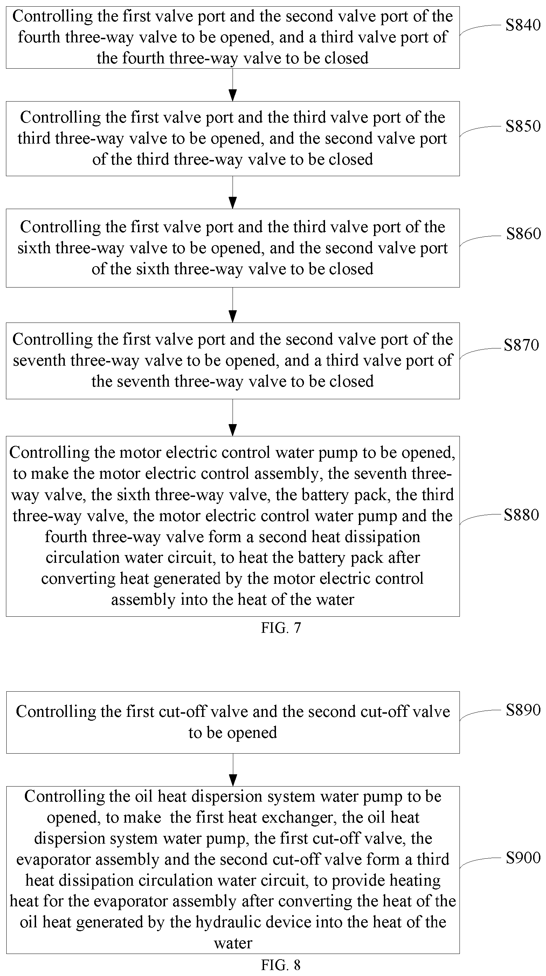

FIG. 7 is a schematic flowchart of a waste heat recovery method according to another exemplary embodiment of the present application. As shown in FIG. 7, the waste heat recovery method may further include:
S840: controlling the first valve port and the second valve port of the fourth three-way valve to be opened, and a third valve port of the fourth three-way valve to be closed.
S850: controlling the first valve port and the third valve port of the third three-way valve to be opened, and the second valve port of the third three-way valve to be closed.
S860: controlling the first valve port and the third valve port of the sixth three-way valve to be opened, and the second valve port of the sixth three-way valve to be closed.
S870: controlling the first valve port and the second valve port of the seventh three-way valve to be opened, and a third valve port of the seventh three-way valve to be closed.
S880: controlling the motor electric control water pump to be opened, to make the motor electric control assembly, the seventh three-way valve, the sixth three-way valve, the battery pack, the third three-way valve, the motor electric control water pump and the fourth three-way valve form a second heat dissipation circulation water circuit, to heat the battery pack after converting heat generated by the motor electric control assembly into the heat of the water.

It should be understood that, after the heat generated by the motor electronic control assembly 27 is converted into the heat of the water, in a process of heating the battery pack 26, the cooling liquid will not pass through the water radiator 29, so that the water radiator 29 is prevented from absorbing part of heat, and all the heat generated by the motor electronic control assembly 27 is used for heating the battery pack 26, thereby an effect of fully utilizing the heat generated by the motor electronic control assembly 27 is achieved, and thus the waste of the heat is effectively reduced.

**In** an embodiment, step S840, step S850, step S860, step S870, and step S880 may be performed after step S830, or may be performed before S810.

FIG. 8 is a schematic flowchart of a waste heat recovery method according to another exemplary embodiment of the present application. As shown in FIG. 8, the waste heat recovery method further includes:
S890: controlling the first cut-off valve and the second cut-off valve to be opened.
S900: controlling the oil heat dispersion system water pump to be opened, to make the first heat exchanger, the oil heat dispersion system water pump, the first cut-off valve, the evaporator assembly and the second cut-off valve form a third heat dissipation circulation water circuit, to provide heating heat for the evaporator assembly after converting the heat of the oil heat generated by the hydraulic device into the heat of the water.

It should be understood that, after the heat of the oil generated by the hydraulic device 24 is converted into the heat of the water, in a process of providing the heating heat for the evaporator assembly 28, the cooling liquid will not pass through the oil radiator 30, so that the oil radiator 30 is prevented from absorbing a portion of the heat, and all the heat generated by the hydraulic device 24 is used for heating the passenger compartment, thereby an effect of fully utilizing the heat generated by the hydraulic device 24 is achieved, and thus the waste of the heat is effectively reduced.

**In** an embodiment, step S890 and step S900 may be performed after step S880, or may be performed before S840.

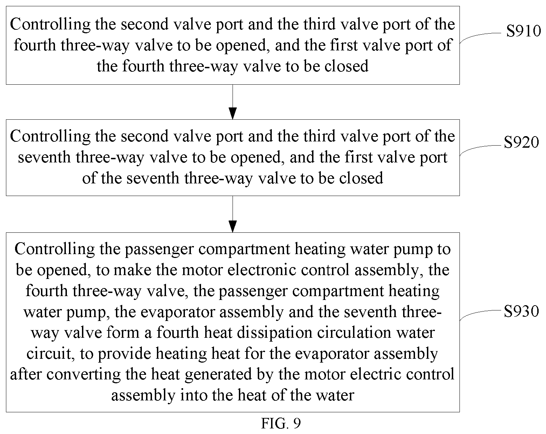

FIG. 9 is a schematic flowchart of a waste heat recovery method according to another exemplary embodiment of the present application. As shown in FIG. 9, the waste heat recovery method further includes:
S910: controlling the second valve port and the third valve port of the fourth three-way valve to be opened, and the first valve port of the fourth three-way valve to be closed.
S920: controlling the second valve port and the third valve port of the seventh three-way valve to be opened, and the first valve port of the seventh three-way valve to be closed.
S930: controlling the passenger compartment heating water pump to be opened, to make the motor electronic control assembly, the fourth three-way valve, the passenger compartment heating water pump, the evaporator assembly and the seventh three-way valve form a fourth heat dissipation circulation water circuit, to provide heating heat for the evaporator assembly after converting the heat generated by the motor electric control assembly into the heat of the water.

It should be understood that, after the heat generated by the motor electric control assembly is converted into the heat of the water, in a process of providing the heating heat for the evaporator assembly 28, the cooling liquid will not pass through the water radiator 29, so that the water radiator 29 is prevented from absorbing a portion of the heat, and all the heat generated by the motor electronic control assembly 27 is used for heating the passenger compartment, thereby an effect of fully utilizing the heat generated by the motor electronic control assembly 27 is achieved, and thus the waste of the heat is effectively reduced.

**In** an embodiment, step S910, step S920 and step S930 may be performed after step S900, or may be performed before S890.

An embodiment of the present application further provides engineering machinery. The engineering machinery includes the foregoing waste heat recovery system 100, and has all functions of the waste heat recovery system 100. Effects of the engineering machinery may refer to the effects of the waste heat recovery system 100.

**In** an embodiment, the engineering machinery may include an excavator, a crane, and the like.

The basic principle of the present application is described above with reference to specific embodiments, but it should be noted that the advantages, preponderances, effects, and the like mentioned in the present application are merely examples and are not limitations. These advantages, preponderances, effects, and the like cannot be considered to be necessarily included in each embodiment of the present application. **In** addition, the specific details disclosed above are merely for the purpose of example and for ease of understanding, but not a limitation, and the foregoing details are not intended to limit the present application to be implemented by using the foregoing specific details.

The block diagrams of the equipment, devices, apparatuses, and systems involved in the present application are merely illustrative examples, and are not intended to require or imply that connections, arrangements, and configurations must be made in the manner shown in block diagrams. As those skilled in the art will recognize that, these equipment, devices, apparatuses, systems may be connected, arranged, configured in any manner. The words such as "comprising", "including", "having" and the like are open words, which means "including but not limited to", and may be used interchangeably. The words "or" and "and" as used herein refer to the word "and/or" and may be used interchangeably with it unless the context clearly indicates otherwise. The word "such as" used herein refers to the phrase "such as, but not limited to", and may be used interchangeably therewith.

Further, it should be noted that, in the device, the apparatuses, and the method of the present application, each component or each step may be decomposed and/or recombined. These decomposition and/or recombination should be considered as equivalent solutions of the present application.

The previous description of the disclosed aspects is provided to enable any person skilled in the art to make or use the present application. Various modifications to these aspects will be apparently to those skilled in the art, and the general principles defined herein may be applied to other aspects without departing from the scope of the present application. Therefore, the present application is not intended to be limited to the aspects shown herein, but is to be accorded the widest scope consistent with the principles and novel features disclosed herein.

The foregoing description has been presented for purposes of illustration and description. Moreover, this description is not intended to limit the embodiments of the present application to the forms disclosed herein. While various example aspects and embodiments have been discussed above, those skilled in the art will recognize certain variations, modifications, changes, additions, and sub-combinations thereof.

## Claims

1. A waste heat recovery system, comprising:
a hydraulic device (24);
a first three-way valve (17), a first valve port (171) of the first three-way valve (17) communicating with an end of the hydraulic device (24);
a second three-way valve (18), a second valve port (182) of the second three-way valve (18) communicating with another end of the hydraulic device (24);
a first heat exchanger (25), two ends of the first heat exchanger (25) communicating with a third valve port (173) of the first three-way valve (17) and a first valve port (181) of the second three-way valve (18), respectively;
an oil radiator (30), two ends of the oil radiator (30) being connected to a second valve port (172) of the first three-way valve (17) and a third valve port (183) of the second three-way valve (18), respectively;
an oil heat dispersion system water pump (19), an end of the oil heat dispersion system water pump (19) being connected to the first heat exchanger (25); and
a battery pack (26), two ends of the battery pack (26) communicating with another end of the oil heat dispersion system water pump (19) and the first heat exchanger (25), respectively.

2. The waste heat recovery system according to claim 1, further comprising:
a third three-way valve (3), a first valve port (31) of the third three-way valve (3) communicating with an end of the battery pack (26);
a motor electronic control water pump (4), an end of the motor electronic control water pump (4) communicating with a third valve port (33) of the third three-way valve (3);
a fourth three-way valve (5), a first valve port (51) of the fourth three-way valve (5) communicating with another end of the motor electronic control water pump (4);
a sixth three-way valve (10), a first valve port (101) of the sixth three-way valve (10) communicating with an end of the battery pack (26);
a seventh three-way valve (9), a first valve port (91) of the seventh three-way valve (9) communicating with a third valve port (103) of the sixth three-way valve (10);
a water radiator (29), two ends of the water radiator (29) communicating with a second valve port (102) of the sixth three-way valve (10) and a second valve port (32) of the third three-way valve (3), respectively; and
a motor electronic control assembly (27), two ends of the motor electronic control assembly (27) communicating with a second valve port (52) of the fourth three-way valve (5) and a second valve port (92) of the seventh three-way valve (9), respectively.

3. The waste heat recovery system according to claim 2, further comprising:
an evaporator assembly (28);
a first cut-off valve (21), two ends of the first cut-off valve (21) communicating with the first heat exchanger (25) and the evaporator assembly (28), respectively; and
a second cut-off valve (23), an end of the second cut-off valve (23) communicating with the evaporator assembly (28), and another end of the second cut-off valve (23) communicating with the oil heat dispersion system water pump (19).

4. The waste heat recovery system according to claim 3, further comprising:
a passenger compartment heating water pump (6), an end of the passenger compartment heating water pump (6) communicating with an end of the evaporator assembly (28), another end of the passenger compartment heating water pump (6) communicating with a third valve port (53) of the fourth three-way valve (5), and another end of the evaporator assembly (28) communicating with a third valve port (93) of the seventh three-way valve (9).

5. The waste heat recovery system according to claim 3, further comprising:
a first expansion valve (7), an end of the first expansion valve (7) communicating with the evaporator assembly (28);
a first condenser (32), an end of the first condenser (32) communicating with another end of the first expansion valve (7); and
a passenger compartment refrigeration compressor (8), two ends of the passenger compartment refrigeration compressor (8) communicating with the evaporator assembly (28) and the first condenser (32), respectively.

6. The waste heat recovery system according to any one of claims 1 to 5, further comprising:
a third cut-off valve (20), two ends of the third cut-off valve (20) communicating with the battery pack (26) and the first heat exchanger (25), respectively; and
a fourth cut-off valve (22), two ends of the fourth cut-off valve (22) communicating with the battery pack (26) and the oil heat dispersion system water pump (19), respectively.

7. The waste heat recovery system according to any one of claims 1 to 6, further comprising:
a battery route water pump (2), an end of the battery route water pump (2) communicating with the battery pack (26);
a second heat exchanger (31), an end of the second heat exchanger (31) communicating with another end of the battery water pump (2);
a fifth cut-off valve (11), two ends of the fifth cut-off valve (11) communicating with the second heat exchanger (31) and the battery pack (26), respectively;
a battery cooling compressor (1), an end of the battery cooling compressor (1) communicating with the second heat exchanger (31);
a second condenser (33), an end of the second condenser communicating with another end of the battery cooling compressor (1); and
a second expansion valve (12), two ends of the second expansion valve (12) communicating with the second condenser (33) and the second heat exchanger (31), respectively.

8. A control method for waste heat recovery applied to the waste heat recovery system according to any one of claims 1 to 7, wherein the control method for waste heat recovery comprises:
controlling the first valve port and the third valve port of the first three-way valve to be opened, and the second valve port of the first three-way valve to be closed;
controlling the first valve port and the second valve port of the second three-way valve to be opened, and the third valve port of the second three-way valve to be closed, to make the hydraulic device, the second three-way valve, the first three-way valve and the first heat exchanger form a first oil circulation circuit; and
controlling the oil heat dispersion system water pump to be opened, to make the first heat exchanger, the oil heat dispersion system water pump and the battery pack form a first heat dissipation circulation water circuit, to heat the battery pack after converting heat of oil generated by the hydraulic device into heat of water.

9. The control method for waste heat recovery according to claim 8, wherein the waste heat recovery system further comprises:
a third three-way valve (3), a first valve port (31) of the third three-way valve (3) communicating with an end of the battery pack (26);
a motor electronic control water pump (4), an end of the motor electronic control water pump (4) communicating with a third valve port (33) of the third three-way valve (3);
a fourth three-way valve (5), a first valve port (51) of the fourth three-way valve (5) communicating with another end of the motor electronic control water pump (4);
a sixth three-way valve (10), a first valve port of the sixth three-way valve (10) communicating with an end of the battery pack (26);
a seventh three-way valve (9), a first valve port (91) of the seventh three-way valve (9) communicating with a third valve port (101) of the sixth three-way valve (10);
a water radiator (29), two ends of the water radiator (29) communicating with a second valve port (102) of the sixth three-way valve (10) and a second valve port (32) of the third three-way valve (3), respectively; and
a motor electronic control assembly (27), two ends of the motor electronic control assembly (27) communicating with a second valve port (52) of the fourth three-way valve (5) and a second valve port (92) of the seventh three-way valve (9), respectively; and
the waste heat recovery control method further comprises:
controlling the first valve port and the second valve port of the fourth three-way valve to be opened, and a third valve port of the fourth three-way valve to be closed;
controlling the first valve port and the third valve port of the third three-way valve to be opened, and the second valve port of the third three-way valve to be closed;
controlling the first valve port and the third valve port of the sixth three-way valve to be opened, and the second valve port of the sixth three-way valve to be closed;
controlling the first valve port and the second valve port of the seventh three-way valve to be opened, and a third valve port of the seventh three-way valve to be closed; and
controlling the motor electronic control water pump to be opened, to make the motor electronic control assembly, the seventh three-way valve, the sixth three-way valve, the battery pack, the third three-way valve, the motor electronic control water pump and the fourth three-way valve form a second heat dissipation circulation water circuit, to heat the battery pack after converting heat generated by the motor electronic control assembly into the heat of the water.

10. The control method for waste heat recovery according to claim 9, wherein the waste heat recovery system further comprises:
an evaporator assembly (28);
a first cut-off valve (21), two ends of the first cut-off valve (21) communicating with the first heat exchanger (25) and the evaporator assembly (28), respectively; and
a second cut-off valve (23), an end of the second cut-off valve (23) communicating with the evaporator assembly (28), and another end of the second cut-off valve (23) communicating with the oil heat dispersion system water pump (19); and
the control method for waste heat recovery further comprises:
controlling the first cut-off valve and the second cut-off valve to be opened; and
controlling the oil heat dispersion system water pump to be opened, to make the first heat exchanger, the oil heat dispersion system water pump, the first cut-off valve, the evaporator assembly and the second cut-off valve form a third heat dissipation circulation water circuit, to provide heating heat for the evaporator assembly after converting the heat of the oil generated by the hydraulic device into the heat of the water.

11. The control method for waste heat recovery according to claim 10, wherein the waste heat recovery system further comprises:
a passenger compartment heating water pump (6), an end of the passenger compartment heating water pump (6) communicating with an end of the evaporator assembly (28), another end of the passenger compartment heating water pump (6) communicating with the third valve port (53) of the fourth three-way valve (5), and another end of the evaporator assembly (28) communicating with the third valve port (93) of the seventh three-way valve (9); and
the control method for waste heat recovery further comprises:
controlling the second valve port and the third valve port of the fourth three-way valve to be opened, and the first valve port of the fourth three-way valve to be closed;
controlling the second valve port and the third valve port of the seventh three-way valve to be opened, and the first valve port of the seventh three-way valve to be closed; and
controlling the passenger compartment heating water pump to be opened, to make the motor electronic control assembly, the fourth three-way valve, the passenger compartment heating water pump, the evaporator assembly and the seventh three-way valve form a fourth heat dissipation circulation water circuit, to provide heating heat for the evaporator assembly after converting the heat generated by the motor electronic control assembly the heat of the water.

12. Engineering machinery, comprising:
the waste heat recovery system according to any one of claims 1 to 7.
